# DEMANDE DE BREVET EUROPEEN

(11) **EP 0 831 354 A1**
(43) Date de publication de la demande: **25.03.1998**
(21) Numéro de dépôt: 97401979.6
(22) Date de dépôt: 25.08.1997
(51) Int. Cl.: G02F 1/095, H01F 41/18, H01F 10/28

(54) **Procédé de dépôt d'un film ferromagnetique sur un guide d'onde, et un composant magnéto-optique comprenant un film mince ferromagnétique déposé selon le procédé**

(30) Priorité: 19.09.1996 FR 9611425
(71) Demandeur: ALCATEL ALSTHOM COMPAGNIE GENERALE D'ELECTRICITE, 75008 Paris (FR)
(72) Inventeur: Belouet, Christian, 92330 Sceaux (FR)
(74) Mandataire: Feray, Valérie

(57) **Abrégé**

l'invention concerne un procédé de dépôt d'un film mince ferromagnétique (16) sur la surface d'un guide d'onde (9) dans lequel
on dépose le film ferromagnétique (16) directement sur le guide d'onde (9), selon l'invention, on limite l'orientation cristalline du film ferromagnétique (16) à une orientation prédéterminée en pulvérisant les nuclei qui n'ont pas ladite orientation prédéterminée.

## Description

L'invention concerne un procédé de dépôt d'un film mince ferromagnétique sur la surface d'un guide d'onde, et un composant magnéto-optique comprenant un guide d'onde à film mince ferromagnétique déposé selon ledit procédé.

Les isolateurs magnéto-optiques sont notamment utilisés pour limiter au maximum la réflexion d'une onde vers sa source. Les isolateurs magnéto-optiques à effet Faraday reposent sur le principe de la rotation Faraday, c'est à dire sur la rotation de la direction de la polarisation de l'onde dans un élément, de type guide d'onde YIG, à aimantation saturée de direction contante. Le fonctionnement est le suivant : l'onde générée passe par un polariseur qui est orienté parallèlement à polarisation de l'onde émise. L'onde passe ensuite à travers l'élément à rotation Faraday ce qui a pour conséquence de faire tourner sa polarisation de 45°. En sortie, l'onde passe à travers un analyseur qui est décalé de 45°, par rapport au polariseur. Les ondes réfléchies passent en sens inverse dans l'élément à rotation Faraday, qui fait tourner la polarisation des ondes réfléchies de 45°. Les ondes réfléchies ont alors une polarisation faisant un angle de 90° avec la direction du polariseur (+45° à l'aller ; +45° au retour). De ce fait, les ondes réfléchies sont arrêtées par le polariseur et ne viennent pas affecter la source.

Pour obtenir l'effet Faraday dans l'élément à rotation Faraday, il est nécessaire que l'élément baigne dans un champ magnétique dont la direction est parallèle à la direction de propagation de l'onde. Pour générer ce champ magnétique de saturation, l'élément de type guide d'onde à coeur YIG est entouré d'un film magnétique développant un champ magnétique suffisant et de direction adéquate pour aimanter, à saturation et dans la direction de propagation de l'onde, ledit élément de type guide d'onde YIG.

Un procédé de réalisation du film magnétique consiste à faire croître un film polycristallin texturé, du type SmCo, FeCo ou équivalent, sur un substrat favorisant la caractéristique de croissance épitaxique du film. Par exemple le substrat peut être du GaAs ou du coridon Al₂O₃.

Dans une seconde étape, le film résultant est séparé de son substrat par séparation chimique (Epitaxial lift-off).

Enfin, le film séparé est mis en place sur l'élément du type guide d'onde à coeur YIG sur lequel il adhère par force de Van de Waals ou par collage avec une résine.

Le nombre d'étapes de cette méthode génère des coûts de production inadaptés à une production en masse de ces isolateurs magnéto-optiques. En outre les méthodes de film rapporté nécessitent que l'élément destiné à recevoir le film ait une surface extérieure de géométrie simple. Cela limite sensiblement les structures géométriques des guides d'onde.

D'autres procédés consistent à faire croître le film directement sur l'élément du type guide d'onde à coeur YIG. Cependant, les couches externes de l'élément du type guide d'onde sont constituées par des matériaux bien moins favorables à la croissance épitaxique du film que Al₂O₃ ou GaAs. Le champ magnétique résultant n'est pas uniforme en amplitude et/ou en direction. De ce fait, l'aimantation à saturation du guide magnéto-optique n'est pas garantie en tout point du guide et les caractéristiques d'isolation de l'isolateur sont limitées.

L'un des buts de la présente invention est de proposer un procédé de dépôt direct d'un film magnétique sur un élément du type guide d'onde à coeur YIG dans lequel l'orientation cristalline du film est très sensiblement améliorée par rapport aux méthodes de dépôt direct existantes.

A cet effet, l'invention concerne un procédé de dépôt d'un film mince ferromagnétique sur la surface d'un guide d'onde dans lequel on dépose le film ferromagnétique directement sur la surface du guide d'onde. Selon l'invention, on limite l'orientation cristalline du film ferromagnétique à une orientation prédéterminée (direction d'aimantation parallèle au guide d'onde) en pulvérisant les nuclei qui n'ont pas ladite orientation prédéterminée.

Selon le procédé on dépose un matériau ferromagnétique sur la surface extérieure du guide d'onde par une méthode de dépôt physique en phase vapeur, associée à un bombardement ionique de la surface.

Simultanément, on irradie ladite surface extérieure avec un faisceau d'ions sous une incidence dite de canalisation pour que le film présente la direction cristalline prédéterminée, et,
on ajuste l'énergie du faisceau d'ions (de quelques dizaines d'eV à quelques centaines d'eV) de telle manière que les nuclei qui se forment avec une texture cristalline différente de la texture cristalline prédéterminée sont pulvérisés par le faisceau d'ions.

Selon un mode de mise en oeuvre du procédé, préalablement au dépôt du matériau ferromagnétique, on dépose une couche tampon submicrométrique d'un matériau favorisant l'accrochage du film ferromagnétique.

Avantageusement cette couche submicrométrique d'accrochage peut présenter un gradient de composition partant d'un matériau optimal pour l'accrochage sur le guide d'onde.

L'invention concerne aussi un isolateur magnéto-optique à rotation Faraday dans lequel le film magnétique a été déposé selon le procédé ci-dessus décrit.

Un avantage de la présente invention résulte de l'amélioration sensible de l'orientation cristalline moyenne du film magnétique.

Le champ magnétique résultant gagne en homogénéité d'amplitude et de direction. L'atténuation de l'isolateur croit par rapport aux isolateurs de l'art antérieur.

En outre le dépôt direct d'une couche tampon sur l'élément guide d'onde permet de jouer sur les contraintes mécaniques induites par le film magnétique sur l'élément guide d'onde et ainsi mieux maîtriser la biréfringence linéaire globale résultant de différentes sources dont la biréfringence de forme du guide d'onde, la biréfringence associée aux contraintes générées par les différents paramètres cristallins entre toutes les couches constituant l'élément de guide d'onde (substrat compris), la biréfringence due aux contraintes induites par les coefficients de dilatation thermique différents pour chaque couche de l'élément de guide d'onde (substrat compris).

Les phénomènes de biréfringence induisent une polarisation elliptique de l'onde incidente, de sorte que l'onde réfléchie n'est pas complètement bloquée par le polariseur.

La diminution de la biréfringence linéaire dans le guide d'onde permet une diminution de cet effet et donc une augmentation des caractéristiques d'isolation de l'isolateur magnéto-optique.

D'autres avantages et caractéristiques de la présente invention résulteront de la description qui va suivre en référence aux dessins annexés dans lesquels :

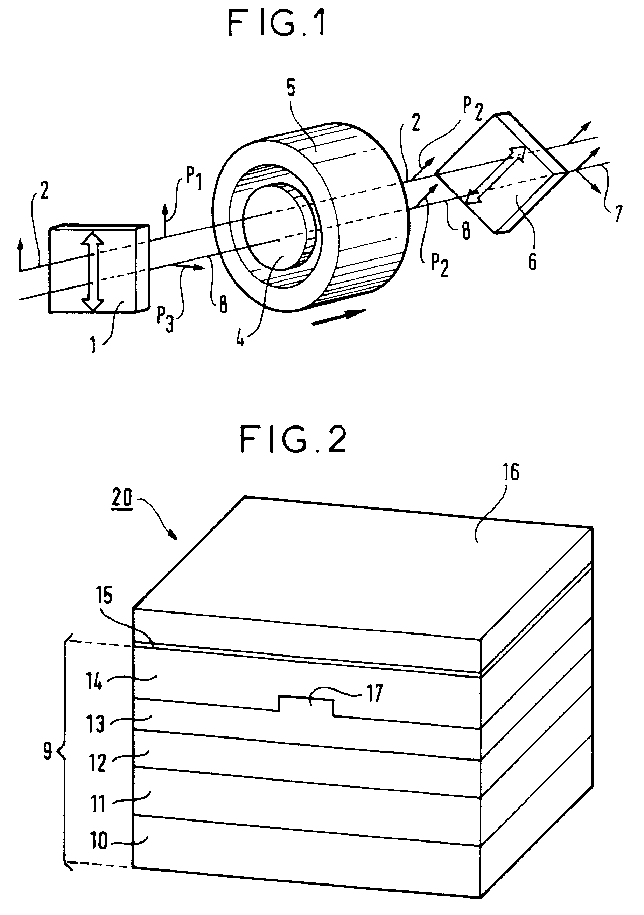

la figure 1 est une représentation schématique d'un isolateur du type a rotation Faraday.

La figure 2 est une représentation schématique des couches constitutives d'un mode de réalisation d'un isolateur magnéto-optique selon l'invention.

Un isolateur magnéto-optique comprend :
un polariseur 1 qui est orienté parallèlement à la polarisation P1 de l'onde émise 2 par la source 3 ;
un élément 4 de type guide d'onde à coeur YIG, entouré d'un film magnétique 5 ; et
un analyseur 6 décalé de 45° par rapport au polariseur 1.

Le fonctionnement est le suivant : l'onde 2 de polarisation P1, générée par une source non représentée, passe par le polariseur 1 d'orientation P1, puis à travers un élément 4 a rotation Faraday ce qui a pour conséquence de faire tourner la polarisation de l'onde 2 de 45°, passant de la polarisation P1 à une polarisation P2.

En sortie, l'onde 2 passe à travers l'analyseur 6 qui est décalé de 45°, par rapport au polariseur 1, soit selon P2.

Pour les ondes 7 réfléchies, seules celles 8 ayant une polarisation P2 à 45° passent à travers l'analyseur 6, les autres sont bloquées. Ces ondes réfléchies 8 passent en sens inverse dans l'élément 4 a rotation Faraday. En sortie les ondes réfléchies 8 ont alors une polarisation P3 faisant un angle de 90° avec la direction P1 du polariseur 1.

De ce fait, les ondes réfléchies 8 sont arrêtées par le polariseur 1 et ne viennent pas affecter la source 3.

L'invention concerne un procédé de dépôt d'un film mince ferromagnétique 16 sur la surface d'un guide d'onde 9 dans lequel on dépose le film ferromagnétique 16 directement sur le guide d'onde 9. Selon l'invention, on limite l'orientation cristalline du film ferromagnétique 16 à une orientation prédéterminée en pulvérisant les nuclei qui n'ont pas ladite orientation prédéterminée.

Selon le procédé on dépose un matériau ferromagnétique sur la surface extérieure du guide d'onde par une méthode de dépôt physique en phase vapeur.

Simultanément, on irradie ladite surface extérieure avec un faisceau d'ion sous une incidence qui favorise une texture cristalline prédéterminée, et,
on ajuste l'énergie du faisceau d'ions de telle manière que les nuclei qui se forment avec une texture cristalline différente de la texture cristalline prédéterminée sont pulvérisés par le faisceau d'ions.

Selon un mode de mise en oeuvre du procédé, préalablement au dépôt du matériau ferromagnétique, on dépose une couche submicrométrique 15 d'un matériau favorisant l'accrochage du film ferromagnétique 16.

Avantageusement cette couche submicrométrique d'accrochage 15 peut présenter un gradient de composition partant d'un matériau optimal pour l'accrochage sur le guide d'onde jusqu'à une composition proche du film ferromagnétique 16.

L'invention concerne aussi un isolateur magnéto-optique à rotation Faraday 20 dans lequel le film magnétique 16 a été déposé selon le procédé ci-dessus décrit.

Dans un exemple de réalisation non limitatif, l'isolateur magnéto-optique 20 peut comprendre :
un guide d'onde 9 comprenant :
- Un substrat 10, par exemple en GGG;
- Une couche tampon 11, par exemple en RE-IG;
- Une couche intermédiaire 12, par exemple en (Bi-Ga) YIG;
- Une couche active 13 avec un guide d'onde 17, par exemple en (Bi-Ga) YIG;
- Une couche de recouvrement isolante 14, par exemple en SiO₂ ou en Si₃N₄; (partie intergrante du guide)
- Une couche submicrométrique 15 d'accrochage présentant un gradient de composition;
- Une couche magnétique 16, par exemple à base de SmCo.

Bien entendu, l'invention n'est pas limitée au mode de mise en oeuvre ou de réalisation décrit et représenté, mais elle est susceptible de nombreuses variantes accessibles à l'homme du métier sans que l'on s'écarte de l'invention. En particulier, la forme du guide d'onde à coeur YIG pourra prendre diverses formes sans sortir du cadre de l'invention. De même le matériau constitutif du film magnétique est susceptible d'être changé sans sortir du cadre de l'invention.

## Revendications

1. Procédé de dépôt d'un film mince ferromagnétique (16) sur la surface d'un guide d'onde (9) dans lequel
on dépose le film ferromagnétique (16) directement sur le guide d'onde (9), caractérisé en ce qu'on limite l'orientation cristalline du film ferromagnétique (16) à une orientation prédéterminée en pulvérisant les nuclei qui n'ont pas ladite orientation prédéterminée.

2. Procédé selon la revendication 1 caractérisé en ce que l'on dépose un matériau ferromagnétique sur la surface extérieure du guide d'onde (9) par une méthode de dépôt physique en phase vapeur,
simultanément, on irradie ladite surface extérieure avec un faisceau d'ion sous une incidence favorisant une texture cristalline prédéterminée, et,
on ajuste l'énergie du faisceau d'ions de telle manière que les nuclei qui se forment avec une texture cristalline différente de la texture cristalline prédéterminée sont pulvérisés par le faisceau d'ions.

3. Procédé selon la revendication 2 caractérisé en ce que, préalablement au dépôt du matériau ferromagnétique, on dépose une couche submicrométrique (15) d'un matériau favorisant l'accrochage du film ferromagnétique (16).

4. Procédé selon la revendication 3 caractérisé en ce que la couche submicrométrique d'accrochage (15) présente un gradient de composition partant d'un matériau optimal pour l'accrochage sur le guide d'onde (9) jusqu'à une composition proche du film ferromagnétique (16).

5. Isolateur magnéto-optique à rotation Faraday comprenant un guide d'onde (9) à coeur YIG (13, 14), et un film magnétique (16), caractérisé en ce que le film magnétique a été déposé par un procédé selon l'une quelconque des revendications 1 à 4.
